# FASCICULE DE BREVET EUROPEEN

(11) **EP 1 213 183 B1**
(45) Date de publication et mention de la délivrance du brevet: **22.09.2004**
(21) Numéro de dépôt: 01403163.7
(22) Date de dépôt: 07.12.2001
(51) Int. Cl.: B60R 1/06

(54) **Rétroviseur extérieur et système de fixation**
Rückblickspiegel und Befestigungssystem
Rear view mirror and fastening system

(30) Priorité: 07.12.2000 FR 0015854
(43) Date de publication de la demande: 12.06.2002
(73) Titulaire: Renault s.a.s., 92100 Boulogne Billancourt (FR)
(72) Inventeur: Curbilie, Pascal, 95250 Beauchamp (FR); Guilbert, Olivier, 28130 Yermenonville (FR); Limon, Alain, 92360 Meudon La Forèt (FR)

(56) Documents cités:
- DE-A- 2 320 056
- DE-A- 2 852 555
- DE-C- 3 510 780
- US-A- 2 495 123
- US-A- 2 516 939

## Description

L'invention concerne un rétroviseur extérieur pour un véhicule, et en particulier son système de fixation.

Un rétroviseur extérieur comporte habituellement une embase qui est rapportée sur un élément de carrosserie tel qu'une portière d'un véhicule automobile. Pour éviter que le rétroviseur puisse être démonté par l'extérieur, le système de fixation est en général accessible uniquement par l'intérieur du véhicule. Ce sont par exemple des vis de fixation qui traversent la portière pour être vissée dans l'embase.

Cependant, les gammes de montage du véhicule ne permettent pas toujours d'accéder aux moyens de fixation depuis l'intérieur. En particulier, il est parfois utile que la garniture intérieure de la portière soit posée avant que le rétroviseur extérieur ne soit posé. Dans ce cas, les moyens de fixation ne seraient plus accessibles car leur accès est caché par la garniture.

Une première solution est de fixer le rétroviseur avec des vis traversant la garniture. Cette solution n'est pas acceptable pour des raisons d'aspect du véhicule. Une deuxième solution est de fixer le rétroviseur par l'extérieur par des moyens inviolables, tels que des vis inviolables. Cependant, il est ensuite impossible de démonter le rétroviseur pour des objectifs de maintenance.

C'est donc un objectif de l'invention de fournir un rétroviseur extérieur qui ne soit pas démontable de l'extérieur quand le véhicule est fermé, pouvant être fixé après la pose de la garniture intérieure et sans qu'aucune fixation ne soit apparente sur la garniture de la portière ou de l'habitacle.

Avec ces objectifs en vue, l'invention a pour objet un système de fixation d'un rétroviseur extérieur sur un élément de carrosserie séparant l'intérieur de l'extérieur d'un véhicule, le rétroviseur comportant une embase sur laquelle est fixée de manière non séparable une coque escamotable, l'embase comportant des moyens de fixation démontables pour fixer l'embase sur l'élément de carrosserie, les moyens de fixations comportant des éléments de manoeuvre, caractérisé en ce que les éléments de manoeuvre sont manoeuvrables depuis l'extérieur du véhicule, un élément de manoeuvre d'au moins un moyen de fixation étant au fond d'un puits, une paroi du puits comportant un orifice latéral, des moyens d'obstruction étant insérables dans le puits devant l'élément de manoeuvre par l'orifice latéral de telle sorte que les moyens d'obstruction obstruent au moins partiellement le puits pour empêcher l'accès à l'élément de manoeuvre, des moyens de maintien des moyens d'obstruction étant agencés de manière à être accessibles uniquement par l'intérieur du véhicule.

Grâce à l'invention, le rétroviseur n'est pas démontable par l'extérieur. En effet, les moyens de fixation ne sont accessibles et manoeuvrables que par l'extérieur de l'élément de carrosserie et dans l'axe du puits. Pour démonter le rétroviseur, il est nécessaire au préalable de démonter les moyens d'obstruction qui empêchent l'accès aux moyens de fixation. Or, ceci ne se fait que par l'intérieur du véhicule. Les moyens d'obstruction sont accessibles à tout moment par quiconque a accès à l'intérieur du véhicule. De plus, les moyens de fixation ne sont pas apparents de l'intérieur ou sur la garniture.

De manière avantageuse, l'élément de carrosserie comporte un chant accessible ni par l'intérieur, ni par l'extérieur lorsque le véhicule est fermé, les moyens d'obstruction étant mis en place depuis le chant de l'élément de carrosserie. Ainsi, les moyens d'obstruction sont cachés à la vue lorsque la portière est fermée.

De manière avantageuse, le rétroviseur comporte une coque escamotable qui recouvrent les moyens de fixation. Ainsi, les moyens de fixation sont visibles en escamotant la coque escamotable et sont cachés lorsque la coque n'est pas escamotée.

Selon une caractéristique particulière, les moyens de fixation sont au moins une vis qui comporte une tête comme élément de manoeuvre et qui est vissée dans au moins un écrou fixé sur l'élément de carrosserie.

Selon une autre caractéristique, les moyens d'obstruction comportent une vis d'obstruction vissée sur l'élément de carrosserie par une partie filetée, et prolongée par une tige d'obstruction passant par l'orifice latéral devant les moyens de fixation. La tige d'obstruction empêche ainsi qu'un outil n'accède aux moyens de fixation. La partie filetée en assure le maintien.

De manière particulière, l'élément de carrosserie est une portière.

L'invention sera mieux comprise et d'autres particularités et avantages apparaîtront à la lecture de la description qui va suivre, la description faisant référence aux dessins annexés parmi lesquels :
- la figure 1 est une vue en coupe d'un rétroviseur conforme à l'invention fixé sur une portière ;
- la figure 2 est une vue que correspondante à la figure 1, mais en éclaté.

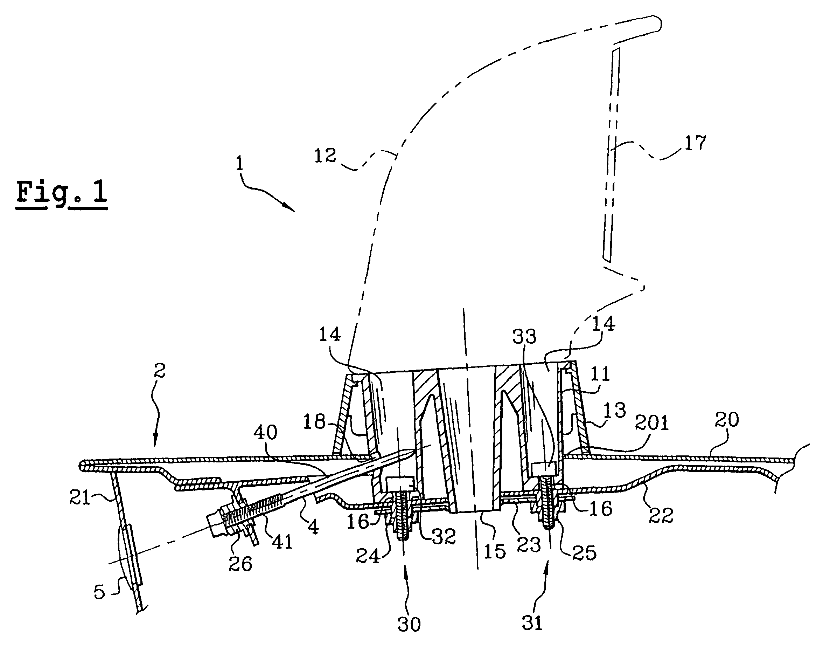

Un rétroviseur 1 conforme à l'invention, en coupe sensiblement horizontale sur la figure 1, est fixé sur une portière 2. Il comporte une embase 11, une coque escamotable 12 montée sur l'embase, un miroir 17 monté de manière ajustable en orientation dans la coque escamotable 12, et un enjoliveur 13 disposé autour de l'embase 11.

La portière 2 comporte un panneau extérieur 20, une armature 22, un chant 21 sensiblement vertical situé vers l'avant de la portière. Le panneau 20 comporte une ouverture 201 pour laisser apparaître l'armature 22. L'armature 22 comporte du côté intérieur et à proximité de l'ouverture 201 un renfort 23 fixé par exemple par collage. L'embase 11 est disposée à travers l'ouverture 201 sur l'armature 22.

L'embase 11 comporte deux puits 14 ouverts vers l'extérieur de la portière. Le fond de chacun desdits puits 14 comporte un orifice 16, de diamètre inférieur à celui du puits. Deux vis de fixation 30, 31 à tête cylindrique 32, 33 sont logées dans les orifices 16 et sont en appui sur le fond des puits 14. Les vis de fixation 30, 31 sont vissées dans des écrous 24, 25 fixés sur le renfort 23 de l'armature 22 par exemple par soudage ou par sertissage. De manière connue en soi, les têtes 32, 33 comportent une empreinte, non représentée, par exemple hexagonale creuse, pour que les vis de fixation soient manoeuvrables par un outil dans le puits.

L'armature 22 comporte un écrou fixe 26, par exemple serti, dans lequel une vis d'obstruction 4 est vissée. La vis d'obstruction 4 comporte une partie filetée 41, une tige d'obstruction 40 qui prolonge la partie filetée 41 jusqu'à proximité immédiate de l'axe de l'une des vis de fixation 30, du côté de la tête 32 de la vis de fixation 30. La tige d'obstruction 40 traverse la paroi du puits 14 par un orifice latéral 18. La vis d'obstruction 4 est accessible pour être tournée par un orifice 27 ménagé dans le chant 21 avant de la portière 2. Cet orifice 27 est obturé par un bouchon 5 amovible.

L'embase 11 comporte un orifice de passage 15 dans lequel des commandes mécaniques ou électriques du rétroviseur passent, de manière connue en soi.

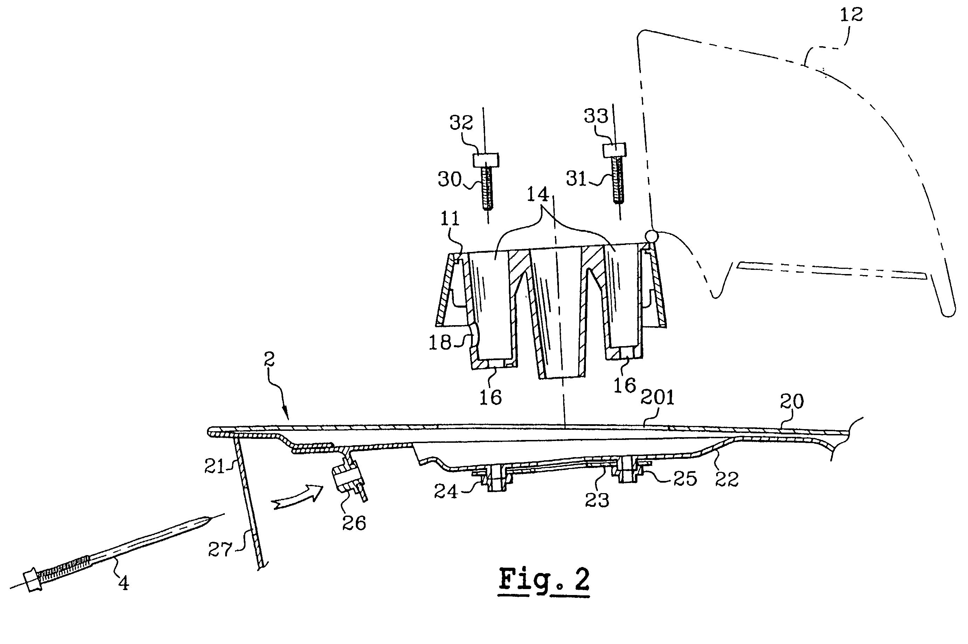

Pour le montage du rétroviseur, comme le montre la figure 2, la coque escamotable 12 est placée de telle sorte qu'elle libère l'accès aux puits 14 de l'embase 11. L'embase 11 est disposée à travers l'ouverture 201 sur l'armature 22 puis fixée par les deux vis de fixation 30, 31, les vis étant manoeuvrées par un outil dans l'axe des puits. La coque escamotable 12 peut alors être remise dans sa position normale, telle que montrée sur la figure 1.

Puis, la portière 2 étant ouverte, la vis d'obstruction 4 est vissée et serrée dans l'écrou fixe 26. Le capuchon 5 est mis en place sur l'orifice 27. Ainsi, la tige d'obstruction 40 empêche l'accès à la tête 32 de la vis 30. Il est alors impossible de desserrer la vis de fixation 30 et de démonter le rétroviseur 1 tant que la vis d'obstruction 4 est en place. Or, quand la portière est fermée, la vis d'obstruction 4 n'est pas accessible par l'extérieur du véhicule.

Pour démonter le rétroviseur 1, on procède en sens inverse du montage, avec la portière ouverte.

L'invention n'est pas limitée à l'exemple qui vient d'être décrit. Le nombre de vis de fixation n'est pas limité. Il suffit par contre d'une seule vis d'obstruction. Les moyens de fixation peuvent être un écrou libre vissé sur une tige filetée fixée sur l'élément de carrosserie. D'autre part, la vis d'obstruction peut être fixée sur un élément de l'embase. Par ailleurs, le rétroviseur peut être fixé sur une aile, la vis d'obstruction traversant le dormant de la portière.

## Revendications

1. Système de fixation d'un rétroviseur (1) extérieur sur un élément de carrosserie (2) séparant l'intérieur de l'extérieur d'un véhicule, le rétroviseur (1) comportant une embase (11) sur laquelle est fixée de manière non séparable une coque escamotable (12), l'embase (11) comportant des moyens de fixation (30, 31) démontables pour fixer l'embase (11) sur l'élément de carrosserie (2), les moyens de fixations (30, 31) comportant des éléments de manoeuvre (32, 33), **caractérisé en ce que** les éléments de manoeuvre (32, 33) sont manoeuvrables depuis l'extérieur du véhicule, un élément de manoeuvre (32) d'au moins un moyen de fixation étant au fond d'un puits (14), une paroi du puits (14) comportant un orifice latéral (18), des moyens d'obstruction (4) étant insérables dans le puits (14) devant l'élément de manoeuvre (32) par l'orifice latéral (18) de telle sorte que les moyens d'obstruction (4) obstruent au moins partiellement le puits (14) pour empêcher l'accès à l'élément de manoeuvre (32), des moyens de maintien (41) des moyens d'obstruction (4) étant agencés de manière à être accessibles uniquement par l'intérieur du véhicule.

2. Système de fixation selon la revendication 1, **caractérisé en ce que** l'élément de carrosserie (2) comporte un chant (21) accessible ni par l'intérieur, ni par l'extérieur lorsque le véhicule est fermé, les moyens d'obstruction (4) étant mis en place depuis le chant (21) de l'élément de carrosserie (2).

3. Système de fixation selon la revendication 1, **caractérisé en ce que** la coque escamotable (12) recouvre les moyens de fixation (30, 31).

4. Système de fixation selon la revendication 1, **caractérisé en ce que** les moyens de fixation sont au moins une vis (30, 31) qui comporte une tête (32, 33) comme élément de manoeuvre et qui est vissée dans au moins un écrou (24, 25) fixé sur l'élément de carrosserie (2).

5. Système de fixation selon la revendication 1, **caractérisé en ce que** les moyens d'obstruction comportent une vis d'obstruction (4) vissée sur l'élément de carrosserie (2) par une partie filetée (41), et prolongée par une tige d'obstruction (40) passant par l'orifice latéral (18) devant les moyens de fixation (30).

6. Système de fixation selon la revendication 1, **caractérisé en ce que** l'élément de carrosserie est une portière (2).

## Patentansprüche

1. Befestigungssystem eines äußeren Rückblickspiegels (1) an einem Element der Karosserie (2), welches das Innere von dem Äußeren eines Fahrzeuges trennt, wobei der Rückblickspiegel (1) eine Basis (11) aufweist, an welcher auf nicht trennbare Art und Weise eine einklappbare Schale (12) befestigt ist, wobei die Basis (11) demontierbare Mittel (30, 31) zum Befestigen der Basis (11) an dem Element der Karosserie (2) aufweist, wobei die Befestigungsmittel (30, 31) Betätigungselemente (32, 33) aufweisen, **dadurch gekennzeichnet, dass** die Betätigungselemente (32, 33) von der Außenseite des Fahrzeugs betätigbar sind, wobei mindestens ein Betätigungselement (32) von mindestens einem Befestigungsmittel am Boden eines Schachtes (14) ist, wobei eine Wand des Schachtes (14) eine seitliche Öffnung (18) aufweist, wobei Versperrungsmittel (4) in den Schacht (14) vor dem Betätigungselement (32) durch die seitliche Öffnung (18) auf solch eine Art und Weise einführbar sind, dass die Versperrungsmittel (4) mindestens teilweise den Schacht (14) verschließen, um den Zugang zu dem Betätigungselement (32) zu verhindern, wobei Haltemittel (41) der Verschließungsmittel (4) in einer Art und Weise angeordnet sind, dass sie ausschließlich vom Inneren des Fahrzeuges zugänglich sind.

2. Befestigungssystem gemäß Anspruch 1, **dadurch gekennzeichnet, dass** das Element der Karosserie (2) eine Schmalseite (21) aufweist, die weder von innen noch von außen zugänglich ist, wenn das Fahrzeug verschlossen ist, wobei die Verschließungsmittel (4) ausgehend von der Schmalseite (21) des Karosserieelements (2) eingesetzt werden.

3. Befestigungssystem gemäß Anspruch 1, **dadurch gekennzeichnet, dass** die einklappbare Schale (12) die Befestigungsmittel (30, 31) abdeckt.

4. Befestigungssystem gemäß Anspruch 1, **dadurch gekennzeichnet, dass** die Befestigungsmittel mindestens eine Schraube (30, 31) sind, welche einen Kopf (32, 33) als Betätigungselement aufweist, und welche in mindestens eine Mutter (24, 25), die an dem Element der Karosserie (2) befestigt ist, eingeschraubt ist.

5. Befestigungssystem gemäß Anspruch 1, **dadurch gekennzeichnet, dass** die Verschließungsmittel eine Verschließungsschraube (4) aufweisen, welche an dem Element der Karosserie (2) durch einen mit einem Gewinde versehenen Teil (41) eingeschraubt ist, und welche durch eine Verschließungsstange (40) verlängert ist, die durch die seitliche Öffnung (18) vor den Befestigungsmitteln (30) hindurchgeht.

6. Befestigungssystem gemäß Anspruch 1, **dadurch gekennzeichnet, dass** das Element der Karosserie eine Fahrzeugtür (2) ist.

## Claims

1. A system for fastening an external rear-view mirror (1) on a bodywork member (2) separating the interior from the exterior of the vehicle, the rear-view mirror (1) comprising a base (11) on which a retractable frame (12) is secured in a non-separable manner, the base (11) comprising detachable fastening means (30, 31) adapted to secure the base (11) on the bodywork member (2), the fastening means (30, 31) comprising manoeuvring members (32, 33), **characterised in that** the manoeuvring members (32, 33) can be manoeuvred from the exterior of the vehicle, one manoeuvring member (32) of at least one fastening means being at the base of a well (14), a wall of the well (14) comprising a lateral orifice (18), wherein obstruction means (4) can be inserted in the well (14) in front of the manoeuvring member (32) via the lateral orifice (18) such that the obstruction means (4) at least partially obstruct the well (14) to prevent access to the manoeuvring member (32), retaining means (41) of the obstruction means (4) being disposed so as to be accessible solely via the interior of the vehicle.

2. A fastening system as claimed in claim 1, **characterised in that** the bodywork member (2) comprises an edge (21) which cannot be accessed from the interior or the exterior when the vehicle is closed, the obstruction means (4) being disposed in position from the edge (21) of the bodywork member (2).

3. A fastening system as claimed in claim 1, **characterised in that** the retractable frame (12) covers the fastening means (30, 31).

4. A fastening system as claimed in claim 1, **characterised in that** the fastening means are at least one screw (30, 31) which comprises a head (32, 33) as a manoeuvring member and which is screwed into at least one nut (24, 25) secured on the bodywork member.

5. A fastening system as claimed in claim 1, **characterised in that** the obstruction means comprise an obstruction screw (4) screwed on the bodywork member (2) by a threaded portion (41) and prolonged by an obstruction rod (40) passing via the lateral orifice (18) in front of the fastening means (30).

6. A fastening system as claimed in claim 1, **characterised in that** the bodywork member is a door (2).
